# EUROPEAN PATENT SPECIFICATION

(11) **EP 0 495 518 B1**
(45) Date of publication and mention of the grant of the patent: **23.04.1997**
(21) Application number: 92100763.9
(22) Date of filing: 17.01.1992
(51) Int. Cl.: G06F 3/06

(54) **Data processing apparatus and method for various data formats**
Datenverarbeitungs-System und -Verfahren für verschiedene Datenformate
Méthode et système de traitement de données pour divers formats de données

(30) Priority: 18.01.1991 JP 18278/91
(43) Date of publication of application: 22.07.1992
(73) Proprietor: FUJITSU LIMITED, Kawasaki-shi, Kanagawa 211 (JP)
(72) Inventor: Minoura, Hiroshi, c/o FUJITSU LIMITED, Nakahara-ku, Kawasaki-shi, Kanagawa 211 (JP); Yamaguchi, Shoji, c/o FUJITSU LIMITED, Nakahara-ku, Kawasaki-shi, Kanagawa 211 (JP)
(74) Representative: Stebbing, Timothy Charles

(56) References cited:
- EP-A- 0 278 133
- GB-A- 2 141 566
- US-A- 4 866 601

## Description

The present invention relates to a data processing apparatus including a large-capacity storage medium such as a compact-disk read-only memory (CD-ROM), and to a method of operating the same.

In recent years, a personal computer has become more and more high-speed and powerful. With the increase in data quantity and diversification of data processing, demand for an external storage medium with a large storage capacity is ever increasing. Recently, personal computers are starting to be equipped with drives for CD-ROM. The CD-ROM medium is a non-magnetic disk and much larger in storage capacity compared with magnetic disks.

Although audio data, video data and data for information processing (hereinafter called computer data) can all be recorded on a CD-ROM, conventional CD-ROMs record those types of data separately in track units, so that different types of data cannot be read at the same time for enabling concurrent processing. Below, a CD-ROM of this data format is called a CD-ROM format disk. However, demand for a data processing system which can read these types of data simultaneously from a single CD-ROM and can perform data-processing, audio-reproduction and graphics-display in synchronisation, is ever increasing. To meet this demand, the CD-ROM XA (extended architecture) system, which is an extension of the basic capabilities of the CD-ROM system, is being established as an international standard.

The CD-ROM XA system allows sound with similar quality to audio compact disk to be reproduced in synchronisation with the display of graphics, by recording both audio and video data in continuous sectors of a disk track. It also allows audio, video and computer data to be processed independently with individual processors, therefore reducing the load of a central processing unit (CPU) which processes computer data, by recording the different types of data together in a single track in sector units. Below, a CD-ROM of this data format is called a CD-ROM XA format disk. The CD-ROM XA system records audio data in a compressed data format to allow room for other information (i.e. video and computer data).

Accordingly, a data processing apparatus including a CD-ROM drive which can handle both CD-ROM and CD-ROM XA format disks economically and effectively, is in great demand.

Two types of CD-ROM readers have been proposed to control a CD-ROM drive to read data from a CD-ROM and to supply the read data to a processor: the first type is an individual circuit (including firmware) specifically designed either for a CD-ROM format or CD-ROM XA format disk; and the second type combines two circuits of the first type, one circuit for CD-ROM format disks and the other circuit for CD-ROM XA format disks.

Thus, if it is desired to read both CD-ROM format and CD-ROM XA format disks, the first-type CD-ROM reader is inconvenient because the reader circuit must be changed from the circuit for controlling CD-ROM format disks to that for controlling CD-ROM XA format disks or vice-versa, according to the format of the disk in use.

On the other hand, the second-type CD-ROM reader is costly because two circuits of the first type are required to handle both CD-ROM format and CD-ROM XA format disks. Moreover, the second-type CD-ROM reader is large-sized and inferior in reliability because of the large amount of circuitry required to control both CD-ROM format and CD-ROM XA format disks.

It is therefore desirable to provide a data processing system including a storage medium, which is capable of handling different formats of that storage medium economically and efficiently; in particular, a data processing system including a CD-ROM which can handle economically and efficiently both CD-ROM format and CD-ROM XA format disks.

It is also desirable for such a data processing system to have a small size and high reliability.

GB-A-2 141 566 discloses a data processing apparatus and a method according to the preamble of each of the independent claims. In this apparatus and method, the storage medium is a disk which stores data in two formats, one capable of bulk fast transfers useful in a swapping operation, and the other capable of periodic slower transfers for file retrieval. The disk controller has two local memories, one of which is a relatively small but fast buffer memory, and the other a relatively large but slow cache memory. The fast buffer memory is used by a host CPU to access swap transfer data, and the slower cache memory is used to retrieve files. The use of a direct memory access controller is avoided in this apparatus.

According to one aspect of the present invention, there is provided a data processing apparatus including:
a main memory;
reading means for reading data from a storage medium;
a central processing unit including command means for addressing data in the storage medium and commanding the reading means to read the data;
memory means for storing data read from the storage medium; and
a control means having a plurality of control modes, each mode corresponding to a different format of data recorded in the storage medium, for controlling the reading means to read the data addressed by said command means, for processing the read data in accordance with the data formats and for storing the processed data into said memory means; characterised in that:
selection means, operatively connected to said command means, are provided for selecting one of the control modes of said control means; and in that
said memory means is commonly used in both of said first and second control modes, and is operable at least in said first control mode to perform a direct memory access, in which data is transferred from said memory means direct to the main memory, and is operable at least in said second control mode to perform a program-controlled access, in which the central processing unit or another processing unit directly accesses the data in the memory means.

According to another aspect of the invention, there is provided a method of operating a data processing apparatus including means for reading data from a storage medium, the method comprising:-
(a) selecting one of a plurality of control modes for reading of data from the storage medium in accordance with the format of data recorded on the storage medium, each control mode corresponding to a respective said format of data;
(b) controlling said reading means in the control mode selected in step (a) so as to read data from the storage medium; and
(c) storing the data read in step (b) in a memory means; characterised by the further step of:
(d) using the same memory means, performing one of (i) a direct memory access, in which the read data is transferred from said memory means direct to a main memory, or (ii) a program-controlled access, in which a processing means directly accesses the data in the memory means; the read data being supplied to one of a plurality of different processing means in accordance with a predetermined attribute of the data.

Reference is made, by way of example, to the accompanying drawings, in which:-
Fig. 1 is a block diagram of a CD-ROM reader embodying the present invention;
Fig. 2 shows an operation to read a CD-ROM format disk in a read-ahead buffering method;
Fig. 3 shows an operation to read a CD-ROM format disk in a cache control method; and
Fig. 4 shows an operation to read a CD-ROM XA format disk.

Throughout the drawings, identical reference numerals are used to designate the same or similar component parts.

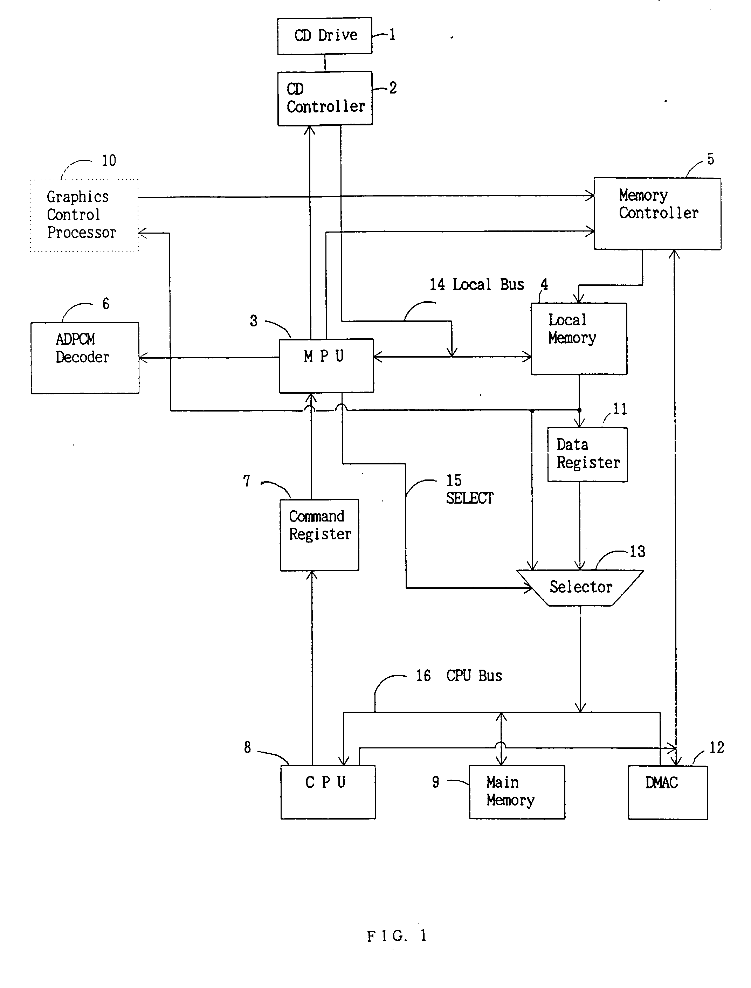

Fig. 1 is a block diagram of a CD-ROM reader embodying the present invention, which can read both CD-ROM format and CD-ROM XA format disks.

A central processing unit (hereinafter abbreviated to CPU) 8, is for example the main processor of a personal computer, etc., and performs data processing under control of a program.

A main memory 9 is the CPU's working memory which stores programs and data for data processing.

A CD drive 1, including a CD-ROM which contains computer data for the CPU 8 and audio data for an ADPCM decoder 6, consists of a mechanism for driving the disk and a pick-up mechanism for reading data recorded on the CD-ROM by detecting light which is transmitted from a laser diode and reflected from the disk.

A local memory 4 is a buffer for storing the data read from the CD-ROM. The data is stored there along with the sector number where the data is recorded on the CD-ROM. Each storage location of the local memory 4 has its address assigned to the CPU-addressable memory space so that the CPU 8 can directly access the data in the local memory 4 with an instruction.

A direct memory access controller 12 (DMAC for short) transfers the data read by the CD drive 1 to the main memory 9 in a direct memory access (DMA) mode, via the local memory 4 and data register 11.

The ADPCM decoder 6 reproduces audio information (e.g. speech or music) by decoding the ADPCM-modulated data read from the CD-ROM (ADPCM stands for adaptive differential pulse coded modulation).

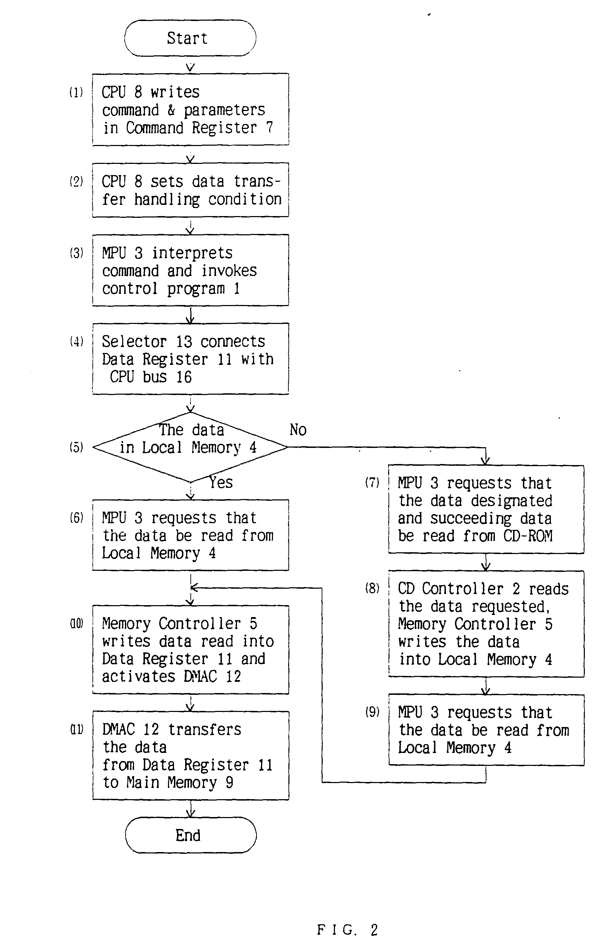

A microprocessor unit (MPU) 3, equipped with firmware of three control programs, Nos. 1, 2 and 3, stored singly or in combination, controls the CD drive 1 to read data from the CD-ROM and stores the read data into the local memory 4, for use by the CPU 8 and ADPCM decoder 6 or for transfer to the main memory. The control program No. 1 stores the data read from a CD-ROM format disk into the local memory 4 in a read-ahead buffering method; the control program No. 2 stores the read data in a cache control method; and the control program No. 3 stores data read from a CD-ROM XA format disk into the local memory 4 for use by the processors such as the CPU 8 and ADPCM decoder 6. Operations performed by each control program are described below with reference to Figs. 2 to 4, respectively.

A memory controller 5 controls the local memory 4 to write/read data to/from the local memory 4 and activates the DMAC 12 to perform DMA-mode data transfer.

A selector 13 selectively connects the output of the local memory 4 or data register 11 with a CPU bus 16 according to a control signal SELECT from the MPU 3.

The CD drive 1 takes a longer seek time and, therefore, has a longer average access time, compared with a magnetic disk drive such as a hard disk drive. To reduce the effective access time when reading a CD-ROM format disk, the present embodiment introduces two methods - a read-ahead buffering method and a cache control method.

Fig. 2 shows an operation to read a CD-ROM format disk in a read-ahead buffering method.

The read-ahead buffering method is useful when the CPU 8 needs data stored in physically continuous or adjacent sectors of a CD-ROM track.

The read-ahead buffering method is performed according to steps (1) to (11) of Fig. 2, as follows:-
(1) The CPU 8 writes a read command and parameters in a CD command register 7. The read command designates the read-ahead buffering method and an operation to read data from a CD-ROM format disk and to store the data in main memory 9. The parameters designate the location (a disk track and sector) where data to be read is recorded and the number of sectors to be read.
(2) The CPU 8 also writes a data transfer handling condition in the DMAC 12. Then, the DMAC 12 enters a wait state to wait for a data transfer request from memory controller 5. The data transfer handling condition includes a main memory data address (abbreviated to DA) from where data is to be stored and a byte count (abbreviated to BC) which designates the number of bytes to be transferred.
(3) The MPU 3 interprets the command and parameters in the CD command register 7 and invokes control program No. 1.
(4) The MPU 3 sends the SELECT signal to the selector 13 to operatively connect the output of the data register 11 with the CPU bus 16.
(5) The MPU 3 determines whether the data requested by the CPU 8 is in the local memory 4, by comparing the sector number of the parameters with that stored in the local memory 4.
(6) When the data requested is in the local memory 4, the MPU 3 requests the memory controller 5 to read the data from the local memory 4.
(7) When the data requested is not in the local memory 4, the MPU 3 requests the CD controller 2 to read the data designated by the parameters and the data recorded in the following sectors, from the CD-ROM.
(8) The CD controller 2 controls the CD drive 1 to read the data in the sector designated and the following sectors. The memory controller 5 transfers the data read to the local memory 4 via the local bus 14. The data transfer continues until the local memory 4 becomes full or the CPU 8 requests data to be read from other CD-ROM locations.
(9) When the first sector (e.g. about 2 kilo-bytes) of data is transferred to the local memory 4, the MPU 3 requests the memory controller 5 to output the data requested by the CPU 8 from the local memory 4.
(10) The memory controller 5 reads the requested data from the local memory 4 and writes it into the data register 11 in units of one or multiple bytes, and issues a data transfer request to the DMAC 12.
(11) On responding to the request from the memory control 5, the DMAC 12 transfers the data in the data register 11 to the main memory 9. The DMAC 12 repeats the above transfer operation the number of times required by the byte count BC.

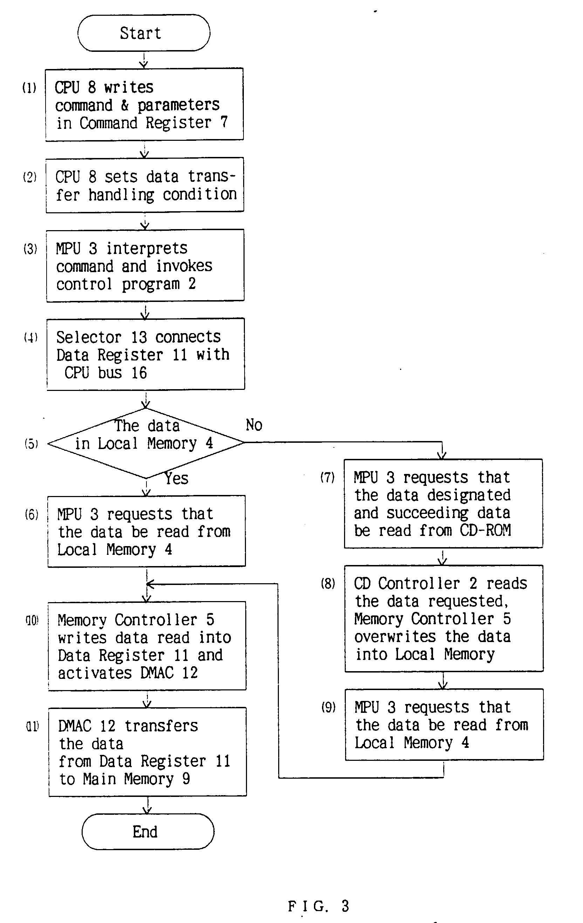

Fig. 3 shows an operation to read a CD-ROM format disk in a cache control method.

The cache control method is useful when the CPU 8 repeatedly uses particular data which is stored in the CD-ROM.

The cache control method is performed according to steps (1) to (11) of Fig. 3. The cache control method is controlled by using the circuit shown in Fig. 1 almost in the same way as the read-ahead buffering method. The only difference is that in step (3) the MPU 3 invokes control program No. 2; and in step (8) the CD memory controller 5 overwrites the data read from the CD-ROM into a local memory location designated by the MPU 3. The MPU 3 designates the location whose data the MPU 3 determines to be least significant, based on statistics of frequency in use, for example. Accordingly, data having a great possibility of being used by the CPU 8 is stored in the local memory 4.

Thus, both the read-ahead buffering and cache control methods can be realised by using the same hardware and switching the firmware (or control programs) designed for each method.

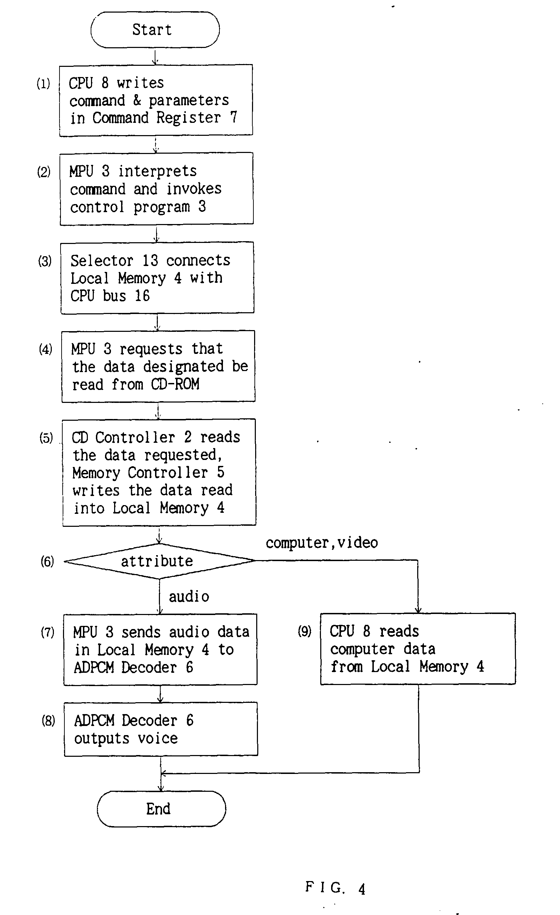

Fig. 4 shows an operation to read a CD-ROM XA format disk.

The present embodiment also allows a CD-ROM XA format disk to be read by using the circuit shown in Fig. 1, as shown in steps (1) to (9) of Fig. 4:-
(1) The CPU 8 writes a read command and parameters in a CD command register 7. The read command designates an operation to read data from a CD-ROM XA format disk and to store the data in local memory 4. The parameters designate the location (a disk track and sector) where data to be read is recorded and the number of sectors to be read.
(2) The MPU 3 interprets the command and parameters in the CD command register 7 and invokes control program No. 3.
(3) The MPU 3 sends the SELECT signal to the selector 13 to operatively connect the output of the local memory 4 with the CPU bus 16.
(4) The MPU 3 requests the CD controller 2 to read the data designated by the parameters from the CD-ROM.
(5) The CD controller 2 controls the CD drive 1 to read audio, video and/or computer data from the CD-ROM. The memory controller 5 writes the data read into the local memory 4 via the local bus 14. Each of the audio, video and computer data of the CD-ROM XA format includes an attribute byte for every 1 sector (about 2 kilo-bytes) of data.
(6) The MPU 3 checks the data in the local memory 4 for an audio attribute.
(7) The MPU 3 sends the data having the audio attribute to the ADPCM decoder 6.
(8) The ADPCM decoder 6 decodes the audio data by expanding the compressed-format audio data and reproduces an audio signal.
(9) The CPU 8 reads the data having the computer attribute from the local memory 4 for data processing.

Thus, by referring to the attribute bytes stored in the local memory 4, the CPU 8 can easily identify the data necessary for its processing, thus reducing the CPU load. Furthermore, by providing a video control processor 10 under control of the MPU 3 in the same way as the ADPCM decoder 6 and by using the local memory 4 as a buffer for the audio, video and computer data, audio reproduction and graphics display can be made in synchronisation with the operations of the CPU 8, thus reducing the CPU load.

Although the above description refers to an embodiment of the invention applied to control of a CD-ROM drive, the present invention is not limited to use with CD-ROM drives. It can also be applied to other types of storage medium (e.g. magneto-optical disks, magnetic tapes, semiconductor chips, etc.) and reading units thereof, wherever different data formats are combined on the same medium; for example, storage media used in "multi-media" applications where video data, audio data and data for information processing may all be recorded on the same medium.

Thus, the present invention can provide a data processing system and method which can control different formats of a storage medium, such as CD-ROM or CD-ROM XA format disks, with a single set of hardware and by selectively using appropriate software. Therefore, the present invention can provide an economical, small-sized and reliable data processing system which can handle both CD-ROM and CD-ROM XA format disks.

## Claims

1. A data processing apparatus including:
a main memory (9);
reading means (1) for reading data from a storage medium;
a central processing unit (8) including command means for addressing data in the storage medium and commanding the reading means (1) to read the data;
memory means (4) for storing data read from the storage medium; and
a control means (3) having a plurality of control modes, each mode corresponding to a different format of data recorded in the storage medium, for controlling the reading means (1) to read the data addressed by said command means, for processing the read data in accordance with the data formats and for storing the processed data into said memory means (4) ; characterised in that:
selection means (7), operatively connected to said command means, are provided for selecting one of the control modes of said control means (3); and in that
said memory means (4) is commonly used in both of said first and second control modes, and is operable at least in said first control mode to perform a direct memory access, in which data is transferred from said memory means (4) direct to the main memory (9), and is operable at least in said second control mode to perform a program-controlled access, in which the central processing unit (8) or another processing unit (6, 10) directly accesses the data in the memory means (4).

2. A data processing apparatus according to claim 1, further comprising direct memory access control means (12) for transferring data from said memory means (4) to the main memory (9) in said direct memory access operation.

3. A data processing apparatus according to claim 1 or 2, wherein a memory location of said memory means (4) is assigned an address in an address space which is addressable by the central processing unit (8) so that the central processing unit can directly access said memory means (4) with an instruction in said program controlled access operation.

4. A data processing apparatus according to claim 1, 2 or 3, wherein said reading means (1) is a CD-ROM drive, said storage medium is a CD-ROM, said first control mode controls the reading of data from a CD-ROM format disk and said second control mode controls the reading of data from a CD-ROM XA format disk.

5. A data processing apparatus according to claim 4, wherein said command means designates the type of CD-ROM in use and said selection means (7) selects one of said first and second control modes according to the designation by said command means.

6. A data processing apparatus according to claim 4 or 5, wherein for the first control mode, said control means (3) includes a read-ahead buffering means, a cache control means and switching means for selecting one of said read-ahead buffering means and cache control means, said read-ahead buffering means controlling the CD-ROM drive (1) to read the data addressed by said command means and data adjacent thereto and said cache control means storing the read data in said memory means (4) in an overwrite operation.

7. A data processing apparatus according to claim 6, wherein in the first control mode, said command means designates one of said read-ahead buffering means and cache control means, and said switching means makes a selection according to the designation by said command means.

8. A data processing apparatus according to claim 4, 5, 6 or 7, wherein said data processing apparatus includes an audio reproducing apparatus (6) and, in the second control mode, said control means (3) provides said audio reproducing apparatus with data having a predetermined attribute of the data stored in said memory means (4).

9. A data processing apparatus according to any of claims 4 to 8, wherein said data processing apparatus further includes a video display apparatus (10) and, in the second control mode, said control means (3) provides said video display apparatus with data having a predetermined attribute of the data stored in said memory means (4).

10. A method of operating a data processing apparatus including means (1) for reading data from a storage medium, the method comprising:-
(a) selecting one of a plurality of control modes for reading of data from the storage medium in accordance with the format of data recorded on the storage medium, each control mode corresponding to a respective said format of data;
(b) controlling said reading means (1) in the control mode selected in step (a) so as to read data from the storage medium; and
(c) storing the data read in step (b) in a memory means (4) ; characterised by the further step of:
(d) using the same memory means (4), performing one of (i) a direct memory access, in which the read data is transferred from said memory means (4) direct to a main memory (9), or (ii) a program-controlled access, in which a processing means (6, 8, 10) directly accesses the data in the memory means (4); the read data being supplied to one of a plurality of different processing means (6, 8, 10) in accordance with a predetermined attribute of the data.

## Patentansprüche

1. Datenverarbeitungsvorrichtung, mit:
einem Hauptspeicher (9);
einer Leseeinrichtung (1) zum Lesen von Daten aus einem Speichermedium;
einer Zentraleinheit (8), die eine Befehlseinrichtung enthält, um Daten im Speichermedium zu adressieren, und der Leseeinrichtung (1) einen Befehl zum Lesen der Daten zu erteilen;
einer Speichereinrichtung (4) zum Speichern aus dem Speichermedium gelesener Daten; und
einer Steuereinrichtung (3) mit einer Vielzahl von Steuermodi, wobei jeder Modus einem verschiedenen Format von im Speichermedium aufgezeichneten Daten entspricht, zum Steuern der Leseeinrichtung (1), die von der Befehlseinrichtung adressierten Daten zu lesen, zum Verarbeiten der gelesenen Daten in Übereinstimmung mit den Datenformaten und zum Speichern der verarbeiteten Daten in der Speichereinrichtung (4); dadurch gekennzeichnet, daß:
eine Auswahleinrichtung (7), die operativ mit der Befehlseinrichtung verbunden ist, zum Auswählen eines der Steuermodi der Steuereinrichtung (3) vorgesehen ist; und daß
die Speichereinrichtung (4) in beiden vom ersten und zweiten Steuermodus gemeinsam verwendet wird, und zumindest im ersten Steuermodus betreibbar ist, einen direkten Speicherzugriff durchzuführen, bei dem Daten von der Speichereinrichtung (4) direkt zum Hauptspeicher (9) transferiert werden, und zumindest im zweiten Steuermodus betreibbar ist, einen programmgesteuerten Zugriff durchzuführen, bei dem die Zentraleinheit (8) oder eine andere Verarbeitungseinheit (6, 10) direkt auf die Daten in der Speichereinrichtung (4) zugreift.

2. Datenverarbeitungsvorrichtung nach Anspruch 1, ferner mit einer Direktspeicherzugriff-Steuereinrichtung (12) zum Transferieren von Daten aus der Speichereinrichtung (4) zum Hauptspeicher (9) in der Direktspeicherzugriff-Operation.

3. Datenverarbeitungsvorrichtung nach Anspruch 1 oder 2, bei welcher einem Speicherplatz der Speichereinrichtung (4) eine Adresse in einem Adressenraum zugeordnet wird, der von der Zentraleinheit (8) adressiert werden kann, so daß die Zentraleinheit direkt auf die Speichereinrichtung (4) mit einer Instruktion in der programmgesteuerten Zugriffsoperation zugreifen kann.

4. Datenverarbeitungsvorrichtung nach Anspruch 1, 2 oder 3, bei welcher die Leseeinrichtung (1) ein CD-ROM-Laufwerk ist, das Speichermedium eine CD-ROM ist, der erste Steuermodus das Lesen von Daten aus einer Platte mit CD-ROM-Format liest, und der zweite Steuermodus das Lesen von Daten aus einer Platte mit CD-ROM XA-Format steuert.

5. Datenverarbeitungsvorrichtung nach Anspruch 4, bei welcher die Befehlseinrichtung den in Verwendung stehenden CD-ROM-Typ bezeichnet, und die Auswahleinrichtung (7) einen vom ersten und zweiten Steuermodus gemäß der Bezeichnung von der Befehlseinrichtung auswählt.

6. Datenverarbeitungsvorrichtung nach Anspruch 4 oder 5, bei welcher für den ersten Steuermodus die Steuereinrichtung (3) eine Vorauslese-Puffereinrichtung, eine Cache-Steuereinrichtung und eine Schalteinrichtung zum Auswählen einer der Vorauslese-Puffereinrichtung und der Cache-Steuereinrichtung enthält, wobei die Vorauslese-Puffereinrichtung das CD-ROM-Laufwerk (1) steuert, die von der Befehlseinrichtung adressierten Daten und diesen benachbarte zu lesen, und wobei die Cache-Steuereinrichtung die gelesenen Daten in der Speichereinrichtung (4) in einer Überschreiboperation speichert.

7. Datenverarbeitungsvorrichtung nach Anspruch 6, bei welcher im ersten Steuermodus die Befehlseinrichtung eine der Vorauslese-Puffereinrichtung und der Cache-Steuereinrichtung bezeichnet, und die Schalteinrichtung eine Auswahl gemäß der Bezeichnung von der Befehlseinrichtung vornimmt.

8. Datenverarbeitungsvorrichtung nach Anspruch 4, 5, 6 oder 7, wobei die Datenverarbeitungsvorrichtung eine Audio-Reproduktionsvorrichtung (6) enthält, und im zweiten Steuermodus die Steuereinrichtung (3) der Audio-Reproduktionsvorrichtung (6) Daten mit einem vorherbestimmten Attribut der in der Speichereinrichtung (4) gespeicherten Daten zuführt.

9. Datenverarbeitungsvorrichtung nach einem der Ansprüche 4 bis 8, wobei die Datenverarbeitungsvorrichtung ferner eine Video-Anzeigevorrichtung (10) enthält, und im zweiten Steuermodus die Steuereinrichtung (3) der Video-Anzeigevorrichtung (10) Daten mit einem vorherbestimmten Attribut der in der Speichereinrichtung (4) gespeicherten Daten zuführt.

10. Verfahren zum Betreiben einer Datenverarbeitungsvorrichtung, die eine Einrichtung (1) zum Lesen von Daten aus einem Speichermedium enthält, welches Verfahren umfaßt:
(a) Auswählen eines einer Vielzahl von Steuermodi zum Lesen von Daten aus dem Speichermedium in Übereinstimmung mit dem Format von auf dem Speichermedium aufgezeichneten Daten, wobei jeder Steuermodus einem jeweiligen Datenformat entspricht;
(b) Steuern der Leseeinrichtung (1) im in Schritt (a) ausgewählten Steuermodus, Daten aus dem Speichermedium zu lesen; und
(c) Speichern der in Schritt (b) gelesenen Daten in einer Speichereinrichtung (4);
gekennzeichnet durch den weiteren Schritt:
(d) Verwenden derselben Speichereinrichtung (4), die durchführt: einen von (i) einem direkten Speicherzugriff, bei dem die gelesenen Daten von der Speichereinrichtung (4) direkt zu einem Hauptspeicher (9) transferiert werden, oder (ii) einem programmgesteuerten Zugriff, bei dem eine Verarbeitungseinrichtung (6, 8, 10) direkt auf die Daten in der Speichereinrichtung (4) zugreift; wobei die gelesenen Daten einer von einer Vielzahl verschiedener Verarbeitungseinrichtungen (6, 8, 10) in Übereinstimmung mit einem vorherbestimmten Attribut der Daten zugeführt werden.

## Revendications

1. Dispositif de traitement de données incluant:
une mémoire centrale (9);
des moyens de lecture (1) pour lire des données sur un support de mémoire;
une unité centrale de traitement (8) incluant des moyens à commandes pour adresser des données sur le support de mémoire et commander les moyens de lecture (1) pour la lecture des données;
des moyens de mémoire (4) pour stocker des données lues sur le support de mémoire; et,
des moyens de commande (3) comportant une pluralité de modes de commande, chaque mode correspondant à un format différent de données enregistrées sur le support de mémoire, pour commander les moyens de lecture (1) pour la lecture des données adressées par lesdits moyens à commandes, pour traiter les données lues selon les formats de données et pour stocker les données traitées dans lesdits moyens de mémoire (4);
caractérisé en ce que:
des moyens de sélection (7), connectés activement auxdits moyens à commandes, sont prévus pour sélectionner l'un des modes de commande desdits moyens de commande (3); et,
lesdits moyens de mémoire (4) sont utilisés en commun à la fois dans lesdits premier et second modes de commande, et peuvent être mis en fonctionnement au moins dans ledit premier mode de commande pour exécuter un accès direct à la mémoire, dans lequel des données sont transférées directement desdits moyens de mémoire (4) à la mémoire centrale (9), et peuvent être mis en fonctionnement au moins dans ledit second mode de commande pour exécuter un accès commandé par programme, dans lequel l'unité centrale de traitement (8) ou une autre unité de traitement (6,10) accède directement aux données dans les moyens de mémoire (4).

2. Dispositif de traitement de données selon la revendication 1, comprenant en outre des moyens de commande d'accès direct à la mémoire (12) pour transférer des données desdits moyens de mémoire (4) à la mémoire centrale (9) dans ladite opération d'accès direct à la mémoire.

3. Dispositif de traitement de données selon la revendication 1 ou 2, dans lequel un emplacement de mémoire desdits moyens de mémoire (4) a une adresse affectée dans un espace d'adresses qui est adressable par l'unité centrale de traitement (8) pour que l'unité centrale de traitement puisse accéder directement auxdits moyens de mémoire (4) avec une instruction dans ladite opération d'accès commandé par programme.

4. Dispositif de traitement de données selon la revendication 1, 2 ou 3, dans lequel lesdits moyens de lecture (1) sont un lecteur de mémoire CD-ROM, ledit support de mémoire est une mémoire CD-ROM, ledit premier mode de commande commande la lecture de données sur un disque de format CD-ROM et ledit second mode de commande commande la lecture de données sur un disque de format CD-ROM XA.

5. Dispositif de traitement de données selon la revendication 4, dans lequel lesdits moyens à commandes indiquent le type de mémoire CD-ROM en fonctionnement et lesdits moyens de sélection (7) sélectionnent l'un desdits premier et second modes de commande selon l'indication par lesdits moyens à commandes.

6. Dispositif de traitement de données selon la revendication 4 ou 5, dans lequel, pour le premier mode de commande, lesdits moyens de commande (3) comprennent un moyen de mise en mémoire tampon à lecture anticipée, un moyen de commande d'antémémoire et un moyen de commutation pour sélectionner l'un dudit moyen de mise en mémoire tampon à lecture anticipée et dudit moyen de commande d'antémémoire, ledit moyen de mise en mémoire tampon à lecture anticipée commandant le lecteur de mémoire CD-ROM (1) pour lire les données adressées par lesdits moyens à commandes et des données adjacentes à celles-ci et ledit moyen de commande d'antémémoire stockant les données lues dans lesdits moyens de mémoire (4) dans une opération de superposition d'écriture.

7. Dispositif de traitement de données selon la revendication 6, dans lequel , dans le premier mode de commande, lesdits moyens à commandes indiquent l'un dudit moyen de mise en mémoire tampon à lecture anticipée et dudit moyen de commande d'antémémoire, et ledit moyen de commutation fait une sélection selon l'indication par lesdits moyens à commandes.

8. Dispositif de traitement de données selon la revendication 4, 5, 6 ou 7, dans lequel ledit dispositif de traitement de données comprend un dispositif de reproduction audio (6) et, dans le second mode de commande, lesdits moyens de commande (3) fournissent audit dispositif de reproduction audio des données comportant un attribut prédéterminé des données stockées dans lesdits moyens de mémoire (4).

9. Dispositif de traitement de données selon l'une quelconque des revendications 4 à 8, dans lequel ledit dispositif de traitement de données comprend en outre un dispositif de visualisation vidéo (10) et, dans le second mode de commande, lesdits moyens de commande (3) fournissent audit dispositif de visualisation vidéo des données comportant un attribut prédéterminé des données stockées dans lesdits moyens de mémoire (4).

10. Procédé pour faire fonctionner un dispositif de traitement de données incluant des moyens (1) pour lire des données sur un support de mémoire, le procédé consistant à:
(a) sélectionner l'un d'une pluralité de modes de commande pour la lecture de données sur le support de mémoire selon le format des données enregistrées sur le support de mémoire, chaque mode de commande correspondant à un dit format de données respectif;
(b) commander lesdits moyens de lecture (1) dans le mode de commande sélectionné dans l'étape (a) de manière à lire des données sur le support de mémoire; et,
(c) stocker les données lues dans l'étape (b) dans des moyens de mémoire (4);
caractérisé par l'autre étape consistant à:
(d) en utilisant les mêmes moyens de mémoire (4), exécuter l'un (i) d'un accès direct à la mémoire, dans lequel les données lues sont transférées directement desdits moyens de mémoire (4) à une mémoire centrale (9), ou (ii) d'un accès commandé par programme, dans lequel un moyen de traitement (6,8,10) accède directement aux données dans les moyens de mémoire (4); les données lues étant fournies à l'un d'une pluralité de moyens de traitement différents (6,8,10) selon un attribut prédéterminé des données.
